# EUROPÄISCHE PATENTSCHRIFT

(11) **EP 2 491 492 B1**
(45) Veröffentlichungstag und Bekanntmachung des Hinweises auf die Patenterteilung: **02.10.2013**
(21) Anmeldenummer: 10775751.0
(22) Anmeldetag: 20.10.2010
(51) Int. Cl.: G05B 19/042, G06F 11/20

(54) **AUTOMATISIERUNGSSYSTEM UND VERFAHREN ZUM BETRIEB EINES AUTOMATISIERUNGSSYSTEMS**
AUTOMATION SYSTEM AND METHOD FOR OPERATING AN AUTOMATION SYSTEM
SYSTÈME D'AUTOMATISATION ET PROCÉDÉ POUR FAIRE FONCTIONNER UN SYSTÈME D'AUTOMATISATION

(30) Priorität: 23.10.2009 DE 102009050449
(43) Veröffentlichungstag der Anmeldung: 29.08.2012
(73) Patentinhaber: Siemens Aktiengesellschaft, 80333 München (DE)
(72) Erfinder: KARL, Harald, 90765 Fürth (DE); KERN, Karl-Heinz, 90480 Nürnberg (DE)
(86) Internationale Anmeldenummer: PCT/EP2010/065796
(87) Internationale Veröffentlichungsnummer: WO 2011/048145

(56) Entgegenhaltungen:
- WO-A1-02/01305
- WO-A1-91/08535
- DE-A1- 19 939 567
- US-A1- 2003 023 892
- US-A1- 2005 232 145

## Beschreibung

Die Erfindung betrifft ein Automatisierungssystem mit einer Automatisierungssteuerung, wenigstens einer Peripherieeinheit und einem Bussystem sowie ein Verfahren zum Betrieb eines derartigen Automatisierungssystems.

Bekannte Automatisierungssysteme dieser Art basieren oftmals auf einer so genannten Master-Slave-Kommunikation zwischen einer Automatisierungssteuerung und damit zu steuernden Peripherieeinheiten. Dabei übernimmt die Automatisierungssteuerung die Rolle des Masters und die Peripherieeinheiten übernehmen die Rollen der Slaves. Der Master kommuniziert über das Bussystem mit den Slaves, während die Slaves nicht oder nur eingeschränkt miteinander kommunizieren. Automatisierungssysteme, an die hohe Verfügbarkeitsanforderungen gestellt werden, beispielsweise für die Automatisierung von Schienenfahrzeugen, müssen es ermöglichen, Ausfälle oder Verfügbarkeitsdefizite einer Automatisierungssteuerung abzufangen oder zu kompensieren.

Ein Automatisierungssystem gemäß Oberbegriff des Patentanspruchs 1 ist aus der DE 199 39 567 A1 bekannt.

Der Erfindung liegt die Aufgabe zu Grunde, ein Automatisierungssystem mit einer verbesserten Betriebssicherheit anzugeben. Ferner liegt der Erfindung die Aufgabe zu Grunde, ein Verfahren zum sicheren Betrieb eines derartigen Automatisierungssystems anzugeben.

Die Aufgabe wird erfindungsgemäß hinsichtlich des Automatisierungssystems durch die Merkmale des Anspruchs 1 und hinsichtlich des Verfahrens durch die Merkmale des Anspruchs 4 gelöst.

Vorteilhafte Ausgestaltungen der Erfindung sind Gegenstand der Unteransprüche.

Das erfindungsgemäße Automatisierungssystem weist eine erste Automatisierungssteuerung und eine redundante zweite Automatisierungssteuerung auf. Ferner weist es wenigstens eine Peripherieeinheit und ein Bussystem auf, das die beiden Automatisierungssteuerungen und die wenigstens eine Peripherieeinheit miteinander verbindet. Die wenigstens eine Peripherieeinheit ist mittels einer zugehörigen Busanschaltungsbaugruppe an das Bussystem angeschlossen. Die Busanschaltungsbaugruppe umfasst einen ersten Buscontroller, der der ersten Automatisierungssteuerung zugeordnet ist und über das Bussystem mit dieser in Verbindung steht, einen zweiten Buscontroller, der der zweiten Automatisierungssteuerung zugeordnet ist und über das Bussystem mit dieser in Verbindung steht, und eine Umschaltungseinheit zum Umschalten zwischen den beiden Buscontrollern.

Dadurch, dass das Automatisierungssystem zwei gleichartige Automatisierungssteuerungen aufweist, kann ein Ausfall oder eine Nichtverfügbarkeit einer der Automatisierungssteuerungen durch die zweite Automatisierungssteuerung kompensiert werden. Dies erhöht vorteilhaft die Betriebssicherheit des Automatisierungssystems.

Dadurch, dass die Busanschaltungsbaugruppen der Peripherieeinheiten jeweils zwei Buscontroller aufweist, die jeweils einer anderen der beiden Automatisierungssteuerungen zugeordnet sind und mit dieser in Verbindung stehen, kann bei einem Wechsel der das Automatisierungssystem steuernden Automatisierungssteuerung die die Steuerung übernehmende Automatisierungssteuerung sehr schnell vollständig über die ihr zugeordneten Buscontroller auf die Peripherieeinheiten zugreifen, da die Verbindung zu diesen Buscontrollern bereits besteht und nicht erst aufgebaut werden muss. Dadurch wird eine Umschaltzeit bei einem Steuerungswechsel des Automatisierungssystems reduziert, was insbesondere vorteilhaft ist, wenn an das Automatisierungssystem hohe Sicherheitsanforderungen mit kurzen Umschaltzeiten gestellt werden.

Die Verringerung der Umschaltzeit wird dabei vorteilhaft mit einem geringen Hardwareaufwand und ohne zusätzlichen Softwareaufwand erreicht, da lediglich die Anzahl der Buscontroller erhöht wird, während alle weiteren Komponenten der Busanschaltungsbaugruppen und Peripherieeinheiten und unverändert bleiben.

In einer bevorzugten Ausgestaltung ist das Bussystem ein Feldbussystem.

Dadurch werden von dem Automatisierungssystem bekannte vorteilhafte Eigenschaften eines Feldbussystems realisiert. Insbesondere werden Verkabelungsaufwand und -kosten reduziert, eine hohe Zuverlässigkeit und Verfügbarkeit durch kurze Signalwege erreicht und eine einfache Erweiterbarkeit und Änderbarkeit des Automatisierungssystems ermöglicht.

Vorzugsweise ist der erste Buscontroller einer Busanschaltungsbaugruppe direkt an das Bussystem angeschlossen und der zweite Buscontroller ist mit dem ersten Buscontroller verbunden und über diese Verbindung indirekt an das Bussystem angeschlossen.

Dadurch braucht nur einer der beiden Buscontroller einer Busanschaltungsbaugruppe an das Feldbussystem angeschlossen werden, so dass der Anschluss der Busanschaltungsbaugruppe an das Bussystem gegenüber einer Busanschaltungsbaugruppe mit nur einem Buscontroller nicht verändert werden muss. Dadurch wird der Hardwareaufwand für den zweiten Buscontroller vorteilhaft reduziert und die Realisierung des erfindungsgemäßen Automatisierungssystems vereinfacht.

Bei dem erfindungsgemäßen Verfahren zum Betrieb eines erfindungsgemäßen Automatisierungssystems wird situationsabhängig eine der beiden Automatisierungssteuerungen zur Steuerung des Automatisierungssystems ausgewählt. Ferner wird in der Busanschaltungsbaugruppe der wenigstens einen Peripherieeinheit derjenige Buscontroller für den Zugriff auf die Peripherieeinheit ausgewählt, der der jeweils zur Steuerung des Automatisierungssystems ausgewählten Automatisierungssteuerung zugeordnet ist.

Durch situationsabhängige Auswahl einer der Automatisierungssteuerungen zur Steuerung des Automatisierungssystems kann die Steuerung situationsbedingten Erfordernissen angepasst werden. Insbesondere kann das Automatisierungssystem bei Ausfall oder Nichtverfügbarkeit einer Automatisierungssteuerung durch die jeweils andere Automatisierungssteuerung gesteuert werden, wodurch, wie oben bereits beschrieben, die Betriebssicherheit des Automatisierungssystems vorteilhaft erhöht wird.

Die Auswahl des der jeweils steuernden Automatisierungssteuerung zugeordneten Buscontrollers für den Zugriff dieser Automatisierungssteuerung auf die Peripherieeinheit ermöglicht dabei die oben bereits erwähnte vorteilhafte Reduzierung der Umschaltzeiten bei einem Wechsel der steuernden Automatisierungssteuerung.

In einer Ausgestaltung des Verfahrens wird das Automatisierungssystem mittels der ersten Automatisierungssteuerung gesteuert, wenn diese zur Steuerung verfügbar und betriebsbereit ist, und mittels der zweiten Automatisierungssteuerung gesteuert, wenn die erste Automatisierungssteuerung nicht betriebsbereit oder nicht verfügbar ist.

Dadurch wird in einfacher und effizienter Weise eine verfügbare und betriebsbereite Automatisierungssteuerung zur betriebssicheren Steuerung des Automatisierungssystems ausgewählt.

Vorzugsweise werden die Verfügbarkeit und Betriebsbereitschaft jeder der Automatisierungssteuerungen laufend überwacht.

Dadurch kann ein Ausfall oder eine Nichtverfügbarkeit einer Automatisierungssteuerung zuverlässig und unverzüglich erkannt werden und erforderlichenfalls die Steuerung des Automatisierungssystems der jeweils anderen Automatisierungssteuerung übergeben werden.

Eine Ausgestaltung des Verfahrens sieht dabei vor, dass sich die beiden Automatisierungssteuerungen gegenseitig auf Verfügbarkeit und Betriebsbereitschaft überwachen.

Dadurch wird die Verfügbarkeit und Betriebsbereitschaft der Automatisierungssteuerungen durch die Automatisierungssteuerungen selbst überwacht, so dass keine zusätzlichen Überwachungsmittel benötigt werden.

Des Weiteren wird den Buscontrollern der Busanschaltungsbaugruppe der wenigstens einen Peripherieeinheit vorzugsweise jeder Wechsel der zur Steuerung des Automatisierungssystems ausgewählten Automatisierungssteuerung über das Bussystem mitgeteilt.

Dadurch wird den Buscontrollern unverzüglich ein Wechsel der steuernden Automatisierungssteuerung angezeigt, so dass der Zugriff auf die Peripherieeinheiten auf diejenigen Buscontroller umgeschaltet werden kann, die der die Steuerung übernehmenden Automatisierungssteuerung zugeordnet sind.

Alternativ oder zusätzlich wird den Buscontrollern der Busanschaltungsbaugruppe der wenigstens einen Peripherieeinheit vorzugsweise zyklisch in vorgebbaren Zeitabständen über das Bussystem mitgeteilt, welche der beiden Automatisierungssteuerungen aktuell zur Steuerung des Automatisierungssystems ausgewählt ist.

Auch dies ermöglicht es den Buscontrollern, einen Wechsel der steuernden Automatisierungssteuerung zu erkennen und darauf zu reagieren. Wenn die zyklische Benachrichtigung der Buscontroller zusätzlich zu einer Benachrichtigung bei jedem Wechsel der steuernden Automatisierungssteuerung verwendet wird, können außerdem Übertragungsfehler, beispielsweise ein Verlust einer Nachricht über einen erfolgten Wechsel der steuernden Automatisierungssteuerung, vorteilhaft kompensiert werden.

Eine weitere bevorzugte alternative oder zusätzliche Ausgestaltung des Verfahrens sieht vor, dass bei einem Wechsel des auf die wenigstens eine Peripherieeinheit zugreifenden Buscontrollers dem den Zugriff übernehmenden Buscontroller von dem den Zugriff abgebenden Buscontroller ein aktueller Systemzustand der wenigstens einen Peripherieeinheit übermittelt wird.

Im Falle eines Wechsels der steuernden Automatisierungssteuerung und eines damit einhergehenden Umschaltens auf die dieser Automatisierungssteuerung zugeordneten Buscontroller können einem Buscontroller, der den Zugriff auf eine Peripherieeinheit übernimmt, von dem ihm den Zugriff übergebenden Buscontroller wichtige Informationen übermittelt werden, die für den fehlerfreien Zugriff auf die Peripherieeinheit benötigt werden. Dadurch braucht ein den Zugriff übernehmender Buscontroller diese Informationen nicht erst selbst ermitteln, wodurch die Umschaltzeit weiter vorteilhaft reduziert wird. Derartige Informationen sind beispielsweise Informationen über das Stecken und Ziehen von Modulen an der Peripherieeinheit, oder Einstellungen und Schreiboperationen, welche von der Peripherieeinheit an dem den Zugriff übergebenden Buscontroller vorgenommen wurden, wie z.B. die Konfiguration von Ports oder das Schreiben von Diagnoseinformationen.

Weitere Merkmale und Einzelheiten der Erfindung werden im Folgenden anhand von Ausführungsbeispielen unter Bezugnahme auf Zeichnungen beschrieben.

Dabei zeigen:
- FIG 1: ein Blockschaltbild eines Automatisierungssystems mit zwei Automatisierungssteuerungen und drei mit diesen über ein Bussystem verbundenen Busanschaltungsbaugruppen von Peripherieeinheiten, und
- FIG 2: ein Blockschaltbild einer Busanschaltungsbaugruppe mit zwei Buscontrollern und einer Umschaltungseinheit.

Einander entsprechende Teile sind in allen Figuren mit den gleichen Bezugszeichen versehen.

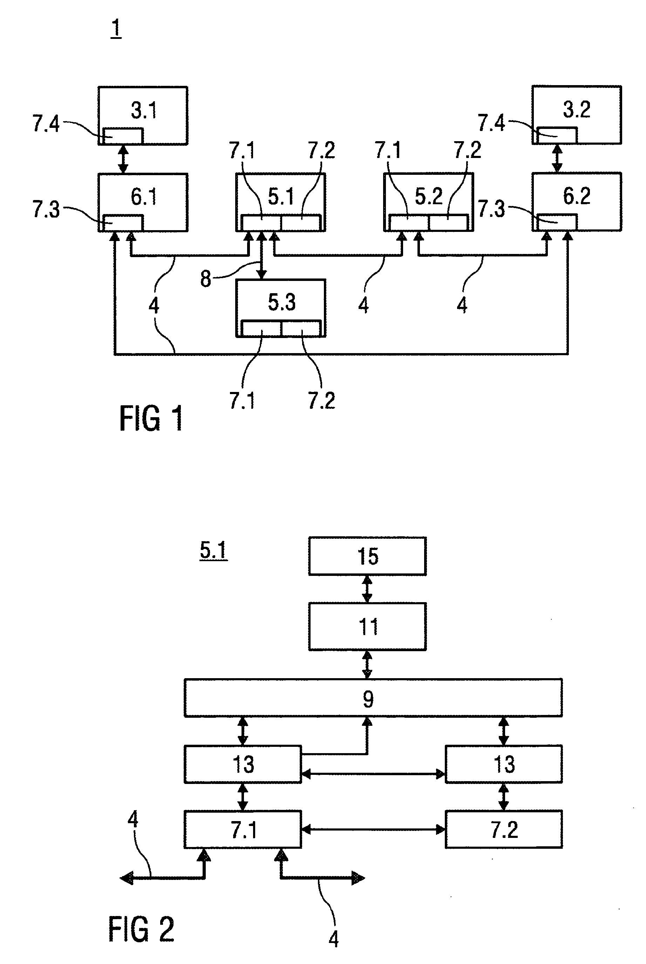

Figur 1 zeigt schematisch ein Blockschaltbild eines Automatisierungssystems 1 mit zwei Automatisierungssteuerungen 3.1, 3.2 und drei mit diesen über ein Bussystem 4 verbundenen Busanschaltungsbaugruppen 5.1, 5.2, 5.3 von nicht näher dargestellten Peripherieeinheiten.

Das Automatisierungssystem 1 kann beispielsweise ein System zur Steuerung von Türen von Schienenfahrzeugen sein. Eine mögliche Peripherieeinheit kann in diesem Beispiel beispielsweise eine Türsteuerung zur automatischen Steuerung des automatischen Schließens und Öffnens einer Tür des Schienenfahrzeuges sein. Die Erfindung ist jedoch weitgehend unabhängig von den konkreten Aufgaben des Automatisierungssystems 1 und der Peripherieeinheiten.

Die Automatisierungssteuerungen 3.1, 3.2 sind als gleichartige Prozessoren zur Steuerung der Peripherieeinheiten mittels jeweils eines Betriebssystems und wenigstens eines Anwendungsprogrammes ausgebildet.

Das Bussystem 4 ist als ein Feldbussystem ausgebildet, beispielsweise als ein so genannter Profibus (= Process Field Bus).

Die Automatisierungssteuerungen 3.1, 3.2 sind jeweils mittels einer zugehörigen Switcheinheit 6.1, 6.2 an das Bussystem 4 angeschlossen.

Jede Busanschaltungsbaugruppe 5.1, 5.2, 5.3 weist zwei gleichartige Buscontroller 7.1, 7.2 zur Steuerung eines Datenaustausches über das Bussystem 4 auf. Dabei ist ein erster Buscontroller 7.1 einer ersten Automatisierungssteuerung 3.1 zugeordnet und steht mit dieser über das Bussystem 4 permanent in Verbindung. Entsprechend ist der zweite Buscontroller 7.2 der zweiten Automatisierungssteuerung 3.2 zugeordnet und steht mit dieser über das Bussystem 4 permanent in Verbindung.

In dem in Figur 1 dargestellten Ausführungsbeispiel sind dabei eine erste Busanschaltungsbaugruppe 5.1 und eine zweite Busanschaltungsbaugruppe 5.2 über ihren jeweiligen ersten Buscontroller 7.1 direkt an das Bussystem 4 angeschlossen, während die dritte Busanschaltungsbaugruppe 5.3 nur indirekt über die erste Busanschaltungsbaugruppe 5.1, mit der sie über eine Zusatzdatenverbindung 8 verbunden ist, an das Bussystem 4 angeschlossen ist. Die Erfindung erlaubt Ausführungsbeispiele mit entsprechend erweiterten oder abgewandelten Vernetzungen von Busanschaltungsbaugruppen 5.1, 5.2, 5.3. Ferner können in alternativen Ausführungsbeispielen die Buscontroller 7.1, 7.2 einer oder mehrerer der Busanschaltungsbaugruppen 5.1, 5.2, 5.3 auch in Reihe an das Bussystem 4 angeschlossen sein.

Die beiden Switcheinheiten 6.1, 6.2 weisen jeweils einen dritten Buscontroller 7.3 zur Steuerung ihres Datenaustausches über das Bussystem 4 auf, und die beiden Automatisierungssteuerungen 3.1, 3.2 weisen jeweils einen vierten Buscontroller 7.4 auf.

Dabei wird eine Steuerungsredundanz hergestellt, die darin besteht, dass von den beiden Automatisierungssteuerungen 3.1, 3.2 gleichzeitig Datenverbindungen zu den Peripherieeinheiten aufgebaut und aufrecht erhalten werden. Durch das Bestehen dieser Datenverbindungen kann wegen der redundanten Ausführung der Automatisierungssteuerungen 3.1, 3.2 durch eine Umschaltung zwischen diesen Automatisierungssteuerungen 3.1, 3.2 eine ausreichend schnelle Umschaltzeit ermöglicht werden; müssten diese Datenverbindungen bei dem Umschalten erst aufgebaut werden, ließen sich die Anforderungen an kurze Umschaltzeiten, beispielsweise im Sekundenbereich, nicht erfüllen.

Durch zwei Buscontroller 7.1, 7.2 in jeder Busanschaltungsbaugruppe 5.1, 5.2, 5.3 wird ermöglicht, dass jede Automatisierungssteuerung 3.1, 3.2 genau eine Verbindung zu den Peripherieeinheiten unterhält, wobei jeder erste und zweite Buscontroller 7.1, 7.2 genau einer Automatisierungssteuerung 3.1, 3.2 zugeordnet ist. Die Automatisierungssteuerungen 3.1, 3.2 sehen dabei getrennte Instanzen der jeweiligen Peripherieeinheit, repräsentiert durch die beiden Buscontroller 7.1, 7.2. Dabei ist jede Busanschaltungsbaugruppe 5.1, 5.2, 5.3 und jede Peripherieeinheit als Hardware jedoch vorteilhaft nur einmal vorhanden, so dass eine Hardwareverdoppelung auf die Buscontroller 7.1, 7.2 beschränkt bleibt.

Figur 2 zeigt detaillierter die erste Busanschaltungsbaugruppe 5.1 in einem Blockschaltbild. Die weiteren Busanschaltungsbaugruppen 5.2, 5.3 sind gleichartig ausgebildet.

Die erste Busanschaltungsbaugruppe 5.1 umfasst einen ersten Buscontroller 7.1, einen zweiten Buscontroller 7.2, eine Umschaltungseinheit 9 und eine Speichereinheit 11. Die beiden Buscontroller 7.1, 7.2 werden jeweils mittels einer Buscontrollersoftware 13 gesteuert. Die Speichereinheit 11 wird mittels eines Speichertreibers 15 gesteuert.

Der erste Buscontroller 7.1 ist direkt an das Bussystem 4 angeschlossen, während der zweite Buscontroller 7.2 mit dem ersten Buscontroller 7.1 verbunden ist und über diese Verbindung indirekt an das Bussystem 4 angeschlossen ist.

Jede Buscontrollersoftware 13 verwaltet für ihren Buscontroller 7.1, 7.2 einen eigenen Stapelspeicher und ein eigenes Gateway, über welche der jeweilige Buscontroller 7.1, 7.2 permanent mit der ihm zugeordneten Automatisierungssteuerung 3.1, 3.2 kommuniziert.

Über eine unten näher beschriebene Redundanzsteuerung und die Verbindung zwischen den beiden Buscontrollern 7.1, 7.2 wird der ersten Busanschaltungsbaugruppe 5.1 mitgeteilt, welche der beiden Automatisierungssteuerungen 3.1, 3.2 momentan prozessführend ist, d.h. welche Automatisierungssteuerung 3.1, 3.2 das Automatisierungssystem 1 momentan steuert. Entsprechend dieser Information werden über die Umschaltungseinheit 9 die Speichereinheit 11 und damit auch die an die erste Busanschaltungsbaugruppe 5.1 angeschlossene Peripherieeinheit einem der beiden Buscontroller 7.1, 7.2 zugeordnet. Über die Verbindung zwischen beiden Buscontrollern 7.1, 7.2 werden Informationen, welche im Umschaltfall benötigt werden, zwischen den beiden Buscontrollern 7.1, 7.2 ausgetauscht.

Mittels einer oben bereits erwähnten Redundanzsteuerung wird geregelt, welche der beiden Automatisierungssteuerungen 3.1, 3.2 momentan prozessführend ist. Für diese Redundanzsteuerung sind aus dem Stand der Technik bereits verschiedene Methoden bekannt, die aufgrund ihrer Bekanntheit hier nur kurz skizziert, aber nicht im Detail erläutert werden, und alternativ und/oder kumulativ angewendet werden können:
- Aufteilung in ein primäres und sekundäres System: wenn die erste Automatisierungssteuerung 3.1 verfügbar und betriebsbereit ist, übernimmt sie die Prozessführung; erst bei ihrem Ausfall oder ihrer Nichtverfügbarkeit übernimmt die zweite Automatisierungssteuerung 3.2 die Prozessführung.
- Laufende gegenseitige Überwachung beider Automatisierungssteuerungen 3.1, 3.2: beide Automatisierungssteuerungen 3.1, 3.2 überwachen sich im laufenden Betrieb permanent gegenseitig, um auch einen Ausfall der gerade nicht steuernden Automatisierungssteuerung 3.1, 3.2 erkennen zu können.
- Die laufende Überwachung und Entscheidung, welche Automatisierungssteuerung 3.1, 3.2 prozessführend ist, erfolgt auf der Ebene eines Anwendungsprogrammes der Automatisierungssteuerungen 3.1, 3.2, auch wenn die Überwachungs- und Entscheidungsfunktionalität von der jeweiligen Anwendung unabhängig ist.
- Die laufende Überwachung und Entscheidung, welche Automatisierungssteuerung 3.1, 3.2 prozessführend ist, erfolgt auf der Ebene eines Betriebssystems der Automatisierungssteuerungen 3.1, 3.2 durch einen Prozess des Betriebssystems.
- Permanente Synchronisation der beiden Automatisierungssteuerungen 3.1, 3.2: die Steuerungsapplikationen auf den beiden Automatisierungssteuerungen 3.1, 3.2 spiegeln immer den aktuellen Betriebszustand des Automatisierungssystems 1 wieder.
- Synchronisation beim Umschalten: die jeweils die Steuerung übernehmende Automatisierungssteuerung 3.1, 3.2 kennt zum Zeitpunkt der Steuerungsübernahme nicht vollständig den aktuellen Betriebszustand des Automatisierungssystems 1 und ermittelt diesen nach dem Umschalten, d.h. nachdem sie die Steuerung des Automatisierungssystems 1 übernommen hat.
- Information der Busanschaltungsbaugruppen 5.1, 5.2, 5.3 über die aktuell prozessführende Automatisierungssteuerung 3.1, 3.2: den Busanschaltungsbaugruppen 5.1, 5.2, 5.3 wird zyklisch in vorgebbaren Zeitabständen und/oder bei einem Wechsel der steuernden Automatisierungssteuerung 3.1, 3.2 über das Bussystem mitgeteilt, welche der beiden Automatisierungssteuerungen 3.1, 3.2 aktuell das Automatisierungssystem 1 steuert; da die beiden Buscontroller 7.1, 7.2 diese Information separat empfangen, ist dabei noch ein Abgleich zwischen ihnen notwendig.
- Diejenigen Buscontroller 7.1, 7.2, welche momentan nicht mit einer Peripherieeinheit verbunden sind, liefern ihre Nutzdaten mit einem Nutzdatenbegleiter. Dabei können die Daten implementierungsabhängig mit einem gültigen oder ungültigen Nutzdatenbegleiter geliefert werden. Eine erfolgte Übernahme des Zugriffs auf eine Peripherieeinheit durch einen Buscontroller 7.1, 7.2 wird der steuernden Automatisierungssteuerung 3.1, 3.2 durch einen Alarm oder zyklische Daten im Kopf eines Nachrichtentelegramms signalisiert; erst danach greift die steuernde Automatisierungssteuerung 3.1, 3.2 auf die Nutzdaten der jeweiligen Peripherieeinheit zu.
- Derjenige Buscontroller 7.1, 7.2 einer Busanschaltungsbaugruppen 5.1, 5.2, 5.3, welcher momentan nicht auf die zugehörige Peripherieeinheit zugreift, liefert die Nutzdaten des jeweils anderen Buscontrollers 7.1, 7.2 dieser Busanschaltungsbaugruppe 5.1, 5.2, 5.3; dazu werden diese Nutzdaten über die Kopplung zwischen den beiden Buscontrollern 7.1, 7.2 übertragen.

Nachfolgend wird detaillierter beschrieben, wie ein Datenaustausch zwischen über ein Bussystem 4, das beispielsweise als Profibus ausgebildet ist, mittels eines Netzwerkprotokolls, beispielsweise eines Profinetprotokolls, realisiert werden kann.

Für jede Automatisierungssteuerung 3.1, 3.2 wird eine Domäne auf demselben physikalischem Netzwerk, beispielsweise einem Ethernet-Netzwerk, eingerichtet. Jede Busanschaltungsbaugruppe 5.1, 5.2, 5.3 meldet bei ihrer Inbetriebnahme den Automatisierungssteuerungen 3.1, 3.2 je eine Netzwerkadresse für jeden ihrer Buscontroller 7.1, 7.2. Jeder dieser Netzwerkadressen wird ein eigener Gerätename zugewiesen, im Falle der oben genannten Türsteuerung für Schienenfahrzeuge z.B. Tür1_P, Tür2_P, etc. für die jeweiligen ersten Buscontroller 7.1 und Tür1_S, Tür2_S, etc. für die jeweiligen zweiten Buscontroller 7.2. Beide Automatisierungssteuerungen 3.1, 3.2 werden mit getrennten Projekten projektiert, wobei jede Automatisierungssteuerung 3.1, 3.2 individuell programmiert wird, wenn die Projektierungssoftware für das Bussystem 4 das Betreiben von zwei Automatisierungssteuerungen 3.1, 3.2 und zwei Buscontrollern 7.1, 7.2 in jeder Busanschaltungsbaugruppe 5.1, 5.2, 5.3 nicht unterstützt. Alle Busteilnehmer Tür1_P, Tür2_P, etc. werden dann der ersten Automatisierungssteuerung 3.1 zugeordnet, alle Busteilnehmer Tür1_S, Tür2_S, etc. werden der zweiten Automatisierungssteuerung 3.2 zugeordnet.

## Patentansprüche

1. Automatisierungssystem (1) mit einer ersten Automatisierungssteuerung (3.1) und einer redundanten zweiten Automatisierungssteuerung (3.2) sowie wenigstens einer Peripherieeinheit und einem Bussystem (4), das die beiden Automatisierungssteuerungen (3.1, 3.2) und die wenigstens eine Peripherieeinheit miteinander verbindet, wobei die wenigstens eine Peripherieeinheit mittels einer zugehörigen Busanschaltungsbaugruppe (5.1, 5.2, 5.3) an das Bussystem (4) angeschlossen ist und die Busanschaltungsbaugruppe (5.1, 5.2, 5.3) einen ersten Buscontroller (7.1) umfasst, **dadurch gekennzeichnet, dass** der erste Buscontroller (7.1) der ersten Automatisierungssteuerung (3.1) zugeordnet ist und über das Bussystem (4) mit dieser in Verbindung steht, und dass die Busanschaltungsbaugruppe (5.1, 5.2, 5.3) einen zweiten Buscontroller (7.2), der der zweiten Automatisierungssteuerung (3.2) zugeordnet ist und über das Bussystem (4) mit dieser in Verbindung steht, und eine Umschaltungseinheit (9) zum Umschalten zwischen den beiden Buscontrollern (7.1, 7.2) umfasst.

2. Automatisierungssystem (1) nach Anspruch 1,
**dadurch gekennzeichnet, dass** das Bussystem (4) ein Feldbussystem ist.

3. Automatisierungssystem (1) nach Anspruch 1 oder 2, **dadurch gekennzeichnet, dass** der erste Buscontroller (7.1) einer Busanschaltungsbaugruppe (5.1, 5.2, 5.3) direkt an das Bussystem (4) angeschlossen ist und der zweite Buscontroller (7.2) mit dem ersten Buscontroller (7.1) verbunden ist und über diese Verbindung indirekt an das Bussystem (4) angeschlossen ist.

4. Verfahren zum Betrieb eines Automatisierungssystems (1) gemäß einem der vorhergehenden Ansprüche, wobei situationsabhängig eine der beiden Automatisierungssteuerungen (3.1, 3.2) zur Steuerung des Automatisierungssystems (1) ausgewählt wird und in der Busanschaltungsbaugruppe (5.1, 5.2, 5.3) der wenigstens einen Peripherieeinheit derjenige Buscontroller (7.1, 7.2) für den Zugriff auf die Peripherieeinheit ausgewählt wird, der der jeweils zur Steuerung des Automatisierungssystems (1) ausgewählten Automatisierungssteuerung (3.1, 3.2) zugeordnet ist.

5. Verfahren nach Anspruch 4,
**dadurch gekennzeichnet, dass** das Automatisierungssystem (1) mittels der ersten Automatisierungssteuerung (3.1) gesteuert wird, wenn diese zur Steuerung verfügbar und betriebsbereit ist, und mittels der zweiten Automatisierungssteuerung (3.2) gesteuert wird, wenn die erste Automatisierungssteuerung (3.1) nicht betriebsbereit oder nicht verfügbar ist.

6. Verfahren nach Anspruch 4 oder 5,
**dadurch gekennzeichnet, dass** die Verfügbarkeit und Betriebsbereitschaft jeder der Automatisierungssteuerungen (3.1, 3.2) laufend überwacht werden.

7. Verfahren nach Anspruch 6,
**dadurch gekennzeichnet, dass** sich die beiden Automatisierungssteuerungen (3.1, 3.2) gegenseitig auf Verfügbarkeit und Betriebsbereitschaft überwachen.

8. Verfahren nach einem der Ansprüche 4 bis 7,
**dadurch gekennzeichnet, dass** den Buscontrollern (7.1, 7.2) der Busanschaltungsbaugruppe (5.1, 5.2, 5.3) der wenigstens einen Peripherieeinheit jeder Wechsel der zur Steuerung des Automatisierungssystems (1) ausgewählten Automatisierungssteuerung (3.1, 3.2) über das Bussystem (4) mitgeteilt wird.

9. Verfahren nach einem der Ansprüche 4 bis 8,
**dadurch gekennzeichnet, dass** den Buscontrollern (7.1, 7.2) der Busanschaltungsbaugruppe (5.1, 5.2, 5.3) der wenigstens einen Peripherieeinheit zyklisch in vorgebbaren Zeitabständen über das Bussystem (4) mitgeteilt wird, welche der beiden Automatisierungssteuerungen (3.1, 3.2) aktuell zur Steuerung des Automatisierungssystems (1) ausgewählt ist.

10. Verfahren nach einem der Ansprüche 4 bis 9,
**dadurch gekennzeichnet, dass** bei einem Wechsel des auf die wenigstens eine Peripherieeinheit zugreifenden Buscontrollers (7.1, 7.2) dem den Zugriff übernehmenden Buscontroller (7.1, 7.2) von dem den Zugriff abgebenden Buscontroller (7.1, 7.2) ein aktueller Systemzustand der wenigstens einen Peripherieeinheit übermittelt wird.

## Claims

1. Automation system (1) having a first automation controller (3.1) and a redundant second automation controller (3.2) as well as at least one peripheral unit and a bus system (4) which connects the two automation controllers (3.1, 3.2) and the at least one peripheral unit to one another, the at least one peripheral unit being connected to the bus system (4) by means of an associated bus interface assembly (5.1, 5.2, 5.3), and the bus interface assembly (5.1, 5.2, 5.3) comprising a first bus controller (7.1), **characterized in that** the first bus controller (7.1) is assigned to the first automation controller (3.1) and is connected to the latter via the bus system (4), and **in that** the bus interface assembly (5.1, 5.2, 5.3) comprises a second bus controller (7.2) which is assigned to the second automation controller (3.2) and is connected to the latter via the bus system (4), and a changeover unit (9) for changing over between the two bus controllers (7.1, 7.2).

2. Automation system (1) according to Claim 1,
**characterized in that** the bus system (4) is a field bus system.

3. Automation system (1) according to Claim 1 or 2,
**characterized in that** the first bus controller (7.1) of a bus interface assembly (5.1, 5.2, 5.3) is directly connected to the bus system (4), and the second bus controller (7.2) is connected to the first bus controller (7.1) and is indirectly connected to the bus system (4) via this connection.

4. Method for operating an automation system (1) according to one of the preceding claims, one of the two automation controllers (3.1, 3.2) being selected to control the automation system (1) on the basis of the situation, and that bus controller (7.1, 7.2) which is assigned to the automation controller (3.1, 3.2) respectively selected to control the automation system (1) being selected to access the peripheral unit in the bus interface assembly (5.1, 5.2, 5.3) of the at least one peripheral unit.

5. Method according to Claim 4,
**characterized in that** the automation system (1) is controlled using the first automation controller (3.1), if the latter is available for control and is ready for operation, and is controlled using the second automation controller (3.2) if the first automation controller (3.1) is not ready for operation or is not available.

6. Method according to Claim 4 or 5,
**characterized in that** the availability and readiness for operation of each of the automation controllers (3.1, 3.2) are continuously monitored.

7. Method according to Claim 6,
**characterized in that** the two automation controllers (3.1, 3.2) monitor one another for availability and readiness for operation.

8. Method according to one of Claims 4 to 7,
**characterized in that** the bus controllers (7.1, 7.2) of the bus interface assembly (5.1, 5.2, 5.3) of the at least one peripheral unit are informed of each change of the automation controller (3.1, 3.2) selected to control the automation system (1) via the bus system (4).

9. Method according to one of Claims 4 to 8,
**characterized in that** the bus controllers (7.1, 7.2) of the bus interface assembly (5.1, 5.2, 5.3) of the at least one peripheral unit are cyclically informed, at predefinable intervals of time, of which of the two automation controllers (3.1, 3.2) is currently selected to control the automation system (1) via the bus system (4).

10. Method according to one of claims 4 to 9, **characterized in that** a current system state of the at least one peripheral unit is transmitted in the event of a change of the bus controller (7.1, 7.2) accessing the at least one peripheral unit from the bus controller (7.1, 7.2) handing over access to the bus controller (7.1, 7.2) assuming access.

## Revendications

1. Système ( 1 ) d'automatisation ayant une première commande ( 3.1 ) d'automatisation et une deuxième commande (3.2) redondante d'automatisation, ainsi qu'au moins une unité périphérique et un système ( 4 ) de bus, qui relie entre eux les deux commandes ( 3.1, 3.2 ) d'automatisation et la au moins une unité périphérique, la au moins une unité périphérique étant raccordée au système ( 1 ) de bus au moyen d'un module ( 5.1, 5.2, 5.3 ) associé de connexion de bus et le module ( 5.1, 5.2, 5.3 ) de connexion de bus comprenant un premier contrôleur ( 7.1 ) de bus, **caractérisé en ce que** le premier contrôleur ( 7.1 ) de bus est associé à la première commande ( 3.1 ) d'automatisation et en liaison avec celle-ci par le système ( 4 ) de bus et **en ce que** le module ( 5.1, 5.2, 5.3) de connexion de bus comprend un deuxième contrôleur ( 7.2 ) de bus qui est associé à la deuxième commande ( 3.2 ) d'automatisation et qui est en liaison avec celle-ci par le système ( 4 ) de bus et une unité ( 9 ) de commutation pour commuter entre les deux contrôleurs ( 7.1, 7.2 ) de bus.

2. Système ( 1 ) d'automatisation suivant la revendication 1,
**caractérisé en ce que** le système ( 4 ) de bus est un système de bus de terrain.

3. Système (1) d'automatisation suivant l'une des revendications 1 ou 2,
**caractérisé en ce que** le premier contrôleur (7.1) de bus d'un module ( 5.1, 5.2, 5.3 ) de connexion de bus est raccordé directement au système ( 4 ) de bus et le deuxième contrôleur ( 7.2 ) de bus est relié au premier contrôleur ( 7.1 ) de bus et raccordé par cette liaison indirectement au système ( 4 ) de bus.

4. Procédé pour faire fonctionner un système ( 1 ) d'automatisation suivant l'une des revendications précédentes, dans lequel on choisit, en fonction de la situation, l'une des deux commandes ( 3.1, 3.2 ) d'automatisation pour la commande du système (1) d'automatisation et on choisit, dans le module ( 5.1, 5.2, 5.3 ) de connexion de bus de la au moins une unité périphérique, le contrôleur ( 7.1, 7.2 ) de bus pour l'accès à l'unité périphérique qui est associé à la commande ( 3.1, 3.2 ) d'automatisation choisie respectivement pour la commande du système ( 1 ) d'automatisation.

5. Procédé suivant la revendication 4,
**caractérisé en ce que** le système ( 1 ) d'automatisation est commandé au moyen de la première commande ( 3.1 ) d'automatisation, lorsque celle-ci est disponible et prête à fonctionner pour la commande, et au moyen de la deuxième commande (3.2) d'automatisation, lorsque la première commande ( 3.1 ) d'automatisation n'est pas prête à fonctionner ou n'est pas disponible.

6. Procédé suivant l'une des revendications 4 ou 5,
**caractérisé en ce que** l'on contrôle en permanence la disponibilité et l'aptitude à fonctionner de chacune des commandes ( 3.1, 3.2 ) d'automatisation.

7. Procédé suivant la revendication 6,
**caractérisé en ce que** l'on contrôle la disponibilité et l'aptitude à fonctionner des deux commandes ( 3.1, 3.2 ) d'automatisation réciproquement.

8. Procédé suivant l'une des revendications 4 à 7,
**caractérisé en ce que** l'on fait part, par le système ( 4 ) de bus, aux contrôleurs ( 7.1, 7.2 ) de bus du module ( 5.1, 5.2, 5.3) de connexion de bus de la au moins une unité périphérique, de respectivement chaque changement de la commande (3.1, 3.2) d'automatisation choisie pour la commande du système ( 1 ) d'automatisation.

9. Procédé suivant l'une des revendications 4 à 8,
**caractérisé en ce que** l'on fait part, par le système ( 4 ) de bus cycliquement à des intervalles de temps pouvant être prescrits aux contrôleurs ( 7.1, 7.2 ) de bus du module ( 5.1, 5.2, 5.3) de connexion de bus de la au moins une unité périphérique de celle des deux commandes ( 3.1, 3.2 ) d'automatisation choisie présentement pour la commande du système ( 1 ) d'automatisation.

10. Procédé suivant l'une des revendications 4 à 9,
**caractérisé en ce que**, lors d'un changement du contrôleur (7.1, 7.2) de bus accédant à la au moins une unité périphérique, il est transmis aux contrôleurs ( 7.1, 7.2 ) de bus prenant en charge l'accès par le contrôleur ( 7.1, 7.2 ) de bus cédant l'accès, un état présent du système de la au moins une unité périphérique.
